# EUROPÄISCHE PATENTSCHRIFT

(11) **EP 2 306 044 B1**
(45) Veröffentlichungstag und Bekanntmachung des Hinweises auf die Patenterteilung: **13.12.2017**
(21) Anmeldenummer: 10009075.2
(22) Anmeldetag: 01.09.2010
(51) Int. Cl.: F16F 13/10

(54) **Aggregatelager und ein Lagerkern dafür**
Aggregate bearing and packaging core for same
Palier d'agrégat et noyau de palier correspondant

(30) Priorität: 30.09.2009 DE 102009043557
(43) Veröffentlichungstag der Anmeldung: 06.04.2011
(73) Patentinhaber: Vibracoustic GmbH, 64293 Darmstadt (DE)
(72) Erfinder: Simuttis, Arnold, Dr., 55545 Bad Kreuznach (DE); Hettler, Werner, 68309 Mannheim (DE)
(74) Vertreter: Flügel Preissner Schober Seidel

(56) Entgegenhaltungen:
- EP-A1- 0 381 198
- EP-A1- 1 457 705
- EP-A1- 2 218 935
- EP-A2- 1 236 927
- EP-A2- 1 239 182
- US-A1- 2003 178 755
- US-B1- 6 289 571

## Beschreibung

### Technisches Gebiet

Die Erfindung betrifft ein Aggregatelager, umfassend einen Lagerkern und ein Auflager, die durch einen Federkörper aus einem elastomeren Werkstoff aufeinander gestützt sind. Außerdem betrifft die Erfindung einen Lagerkern für ein Aggregatelager.

### Stand der Technik

Aggregatelager und Lagerkeme sind allgemein bekannt und beispielsweise als Hydrolager zur Lagerung von Motoren in Kraftfahrzeugen ausgebildet. Durch die immer höher werdenden Anforderungen an eine gute Aerodynamik von Kraftfahrzeugen und damit einhergehende gekapselte und/oder engere Motorräume sind die zur Anwendung gelangenden Aggregatelager hohen thermischen Belastungen ausgesetzt.

Ein Lagerkern aus metallischem Werkstoff weist eine hohe Festigkeit und Formstabilität auch dann auf, wenn das Aggregatelager thermisch hochbelastet ist. Ein solcher Lagerkern ist von Vorteil, wenn dieser einen Anschlag zur Begrenzung extremer Auslenkbewegungen des Lagerkerns bezogen auf das Auflager aufweist. Nachteilig ist jedoch, dass der am Lagerkern gebunden angeordnete Federkörper durch die gute Wärmeleitfähigkeit des metallischen Lagerkerns mit unerwünscht hohen Temperaturen beaufschlagt wird. Dies führt häufig zumindest zu verringerten Standzeiten, wenn nicht gar zu einer Beschädigung/Zerstörung des Aggregatelagers.

Ein Beispiel für ein derartiges Aggregatelager ist aus der US 6,289,571 B1 bekannt. Ein metallischer Lagerkern liegt in diesem Aggregatelager unmittelbar an einer ihnen abstützenden Elastomerfeder an.

Ein Lagerkern aus polymerem Werkstoff weist demgegenüber durch seine, bezogen auf metallische Werkstoffe, bessere Wärmeisolation einen besseren Schutz des elastomeren Federkörpers vor hohen Temperaturen auf. Insbesondere dann, wenn der Lagerkern einen Anschlag zur Begrenzung von extremen Auslenkbewegungen aufweist und der Anschlag ebenfalls aus einem polymeren Werkstoff besteht, weil er zum Beispiel einen einteiligen Bestandteil des Lagerkerns bildet, sind die Festigkeit dieses Anschlags und daraus resultierend die Gebrauchseigenschaften des Aggregatelagers wenig zufriedenstellend.

Zum Schutz vor Strahlungswärme oder vor anströmender heißer Luft wird in EP 1 239 182 A2 vorgeschlagen, an einer Außenseite eines Aggregatelagers eine Gummimembran als Hitzeschild vorzusehen.

Ferner geht aus US 2003/0178755 A1 ein Aggregatelager hervor, das einen Lagerkern und ein Auflager aufweist, die sich über einen Federkörper aufeinander abstützen. Zur Begrenzung extremer Auslenkbewegungen des Lagerkerns ist in dem Lagerkern eine Aufnahme eingebracht, in die ein Anschlag aus einem metallischen Werkstoff eingesetzt ist, der vollständig von einer Ummantelung aus einem elastomeren Werkstoff umschlossen ist.

### Darstellung der Erfindung

Der Erfindung liegt die Aufgabe zu Grunde, ein Aggregatelager und einen Lagerkern der eingangs genannten Art derart weiterzuentwickeln, dass der aus einem elastomeren Werkstoff bestehende Federkörper durch den Lagerkern möglichst gut wärmeisoliert wird und dass der Lagerkern außerdem eine ausreichend große Festigkeit aufweist, wenn hohe Quer- und Zugkräfte in das Aggregatelager eingeleitet werden und diese Kräfte durch Anschläge des Lagerkerns begrenzt werden.

Diese Aufgabe wird erfindungsgemäß mit den Merkmalen der Ansprüche 1 und 13 gelöst. Auf vorteilhafte Ausgestaltungen nehmen die darauf jeweils rückbezogenen Unteransprüche Bezug.

Zur Lösung der Aufgabe ist ein Aggregatelager vorgesehen, umfassend einen Lagerkern und ein Auflager, wobei der Lagerkern als Mehrkörperkern ausgebildet ist, umfassend zumindest einen Anschlag aus einem metallischen Werkstoff, der von einer Ummantelung aus einem wärmeisolierenden Werkstoff zumindest teilweise umschlossen ist, wobei der Anschlag zur Begrenzung extremer Auslenkbewegungen des Lagerkerns relativ zum Auflager an ein Anschlaggehäuse anlegbar ist, wobei die Ummantelung und das Auflager durch einen Federkörper aus einem elastomeren Werkstoff aufeinander abgestützt sind, wobei der wärmeisolierende Werkstoff durch einen polymeren Werkstoff gebildet ist, wobei der Federkörper nur mit der Ummantelung und nicht mit dem metallischen Werkstoff in Berührung kommt, und wobei der Anschlag und der Federkörper vom Anschlaggehäuse im Wesentlichen topfförmig umschlossen sind.

Der polymere Werkstoff kann zur weiter verbesserten Wärmeisolierung einen mineralischen Füllstoff aufweisen.

Der Füllstoff kann durch gemahlenen Glimmer gebildet sein.

Dadurch, dass der Lagerkern als Mehrkörperkern ausgebildet ist, umfassend den Anschlag aus metallischem Werkstoff, der von der Ummantelung aus polymerem Werkstoff umschlossen ist, wobei der elastomere Federkörper nur mit der Ummantelung aus polymerem Werkstoff und nicht mit einem metallischen Werkstoff in Berührung kommt, wird der Zielkonflikt Wärmeisolation und dadurch Schutz des Federkörpers einerseits und Festigkeit/Dauerhaltbarkeit des Anschlags zur Begrenzung extremer Auslenkbewegungen andererseits gelöst.
Durch die Ummantelung kann die Temperatur im Inneren des Aggregatelagers um zumindest 10°C gesenkt werden, bezogen auf Aggregatelager, bei denen der Federkörper einen metallischen Lagerkern berührt.
Der aus einem metallischen Werkstoff bestehende Anschlag, der den Federkörper nicht berührt, weist gleichbleibend gute Gebrauchseigenschaften während einer langen Gebrauchsdauer auf. Die Festigkeit des Anschlags kann durch Dimensionierung und/oder Werkstoffauswahl problemlos an die jeweiligen Gegebenheiten des Anwendungsfalles angepasst werden.

Bevorzugt ist es vorgesehen, dass der Anschlag von der Ummantelung vollständig ummantelt ist. Hierbei ist von Vorteil, dass der Anschlag einerseits gut vor Umgebungseinflüssen geschützt ist und andererseits Anschlaggeräusche reduziert sind, wenn der Anschlag das zumeist aus einem metallischen Werkstoff bestehende Anschlaggehäuse zur Begrenzung extremer Auslenkbewegungen berührt.

Der Anschlag kann durch ein Blechteil gebildet sein. Aus Blech bestehende Anschläge können einfach und kostengünstig hergestellt werden, beispielsweise durch Tiefziehen. Außerdem ist das gesamte Aggregatelager dadurch einfach und kostengünstig herstellbar. Das Umspritzen metallischer Bauteile mit polymeren Werkstoffen ist allgemein bekannt und prozesssicher durchführbar.

Das Anschlaggehäuse ist stirnseitig einerseits mit dem Auflager, zum Beispiel durch Bördeln, verbunden, und stirnseitig andererseits weist das Anschlaggehäuse eine zentrale Durchbrechung auf, die vom Lagerkern durchdrungen ist. Die Begrenzung extremer Auslenkbewegungen erfolgt in axialer und radialer Richtung dadurch, dass der Anschlag an das Anschlaggehäuse anschlägt. Dadurch wird eine unerwünscht hohe mechanische Belastung des elastomeren Federkörpers vermieden; die Gebrauchsdauer und die Gebrauchseigenschaften des Aggregatelagers werden dadurch verbessert.

Das Auflager und das Anschlaggehäuse können kraft- und/oder formschlüssig miteinander verbunden sein. Derartige Fügetechniken sind auch im Bereich von Aggregatelagern bekannt und bewährt.

Der Lagerkern kann eine Befestigungseinrichtung zur Befestigung eines Aggregats aufweisen. Die Befestigungseinrichtung kann durch ein Sacklochgewinde, eine Schraube oder einen Zapfen mit Querbohrung gebildet sein. Das ist davon abhängig, auf welche Art und Weise das zu lagernde Aggregat am Lagerkern befestigbar ist.

Die Befestigungseinrichtung kann auf ihren der Ummantelung zugewandten Seiten zumindest teilweise von einem Glimmer-Wärmeschutzschild überdeckt sein.

Das Glimmer-Wärmeschutzschild kann durch eine Glimmerscheibe und/oder ein Glimmerrohr gebildet sein.

Durch das Glimmer-Wärmeschutzschild wird die Ummantelung zusätzlich vor lokalen Temperaturüberhöhungen geschützt.

Das zuvor beschriebene Aggregatelager kann als Hydrolager ausgebildet sein, wobei der Lagerkern, das Auflager und der Federkörper einen jeweils mit Dämpfungsflüssigkeit gefüllten Arbeits- und Ausgleichsraum begrenzen, wobei der Arbeits- und Ausgleichsraum durch eine Trennwand voneinander getrennt und durch einen Dämpfungskanal flüssigkeitsleitend miteinander verbunden sind. Der zuvor beschriebene generelle Aufbau kann bedarfsweise modifiziert werden, z.B. dadurch, dass an den jeweiligen Anwendungsfall angepasste Düsenkäfige in der Trennwand montiert werden und/oder ein zusätzlicher Tilger innerhalb des Lagers vorgesehen wird, um Leerlaufschwingungen tilgen zu können. Der erfindungsgemäße Lagerkern kann bei allen aus dem Stand der Technik bekannten Aggregatelagern zur Anwendung gelangen.

Außerdem betrifft die Erfindung einen Lagerkern für ein Aggregatelager, der als Mehrkörperkern ausgebildet ist, umfassend zumindest einen Anschlag aus einem metallischen Werkstoff, der von einer Ummantelung aus einem wärmeisolierenden Werkstoff zumindest teilweise umschlossen ist, wobei der wärmeisolierende Werkstoff durch einen polymeren Werkstoff gebildet ist und wobei ein elastomerer Federkörper nur mit der Ummantelung und nicht mit dem metallischen Werkstoff in Berührung kommt. Ein solcher Lagerkern kann praktisch in allen Aggregatelagern zur Anwendung gelangen, bevorzugt in solchen, die hohen Temperaturen aus der Umgebung ausgesetzt sind und ein Anschlaggehäuse zur Begrenzung extremer Auslenkbewegungen aufweisen. Dadurch, dass der Lagerkern, mit Ausnahme des Anschlags, aus einem polymeren Werkstoff besteht, sind der Federkörper und das Innere des Aggregatelagers vor einer unerwünscht hohen Wärmeübertragung aus der Umgebung geschützt. Der aus einem metallischen Werkstoff bestehende Anschlag weist eine ausreichend hohe Festigkeit auf, auch um ein wiederholtes Anschlagen am Anschlaggehäuse unbeschadet zu überstehen.

### Kurzbeschreibung der Zeichnung

In den Figuren 1 bis 6 ist jeweils ein Ausführungsbeispiel eines erfindungsgemäßen Aggregatelagers mit erfindungsgemäßem Lagerkern gezeigt. Die Figuren zeigen in schematischer Darstellung:
- Figur 1: ein erstes Ausführungsbeispiel mit einem Anschlag, der als stirnseitig eingebördeltes Blechteil ausgebildet ist,
- Figur 2: ein zweites Ausführungsbeispiel, bei dem der Anschlag aus einem metallischen Tiefziehtteil besteht, das vollständig von der polymeren Ummantelung des Lagerkerns ummantelt ist,
- Figur 2a: das zweite Ausführungsbeispiel aus Figur 2, bei dem die Befestigungseinrichtung gegenüber der Ummantelung durch eine Glimmerscheibe und ein Glimmerrohr wärmeisoliert ist,
- Figur 3: ein drittes Ausführungsbeispiel, ähnlich dem Ausführungsbeispiel aus Figur 2, wobei die Befestigungseinrichtung als Sacklochgewinde ausgebildet ist,
- Figur 4: ein viertes Ausführungsbeispiel, ähnlich dem Ausführungsbeispiel aus Figur 3, wobei die Befestigungseinrichtung als Schraube ausgebildet ist,
- Figur 5: ein fünftes Ausführungsbeispiel, ähnlich dem Ausführungsbeispiel aus Figur 4, wobei unter dem Schraubenkopf eine zusätzliche Scheibe angeordnet ist,
- Figur 6: ein sechstes Ausführungsbeispiel mit einem Zwischenring und einem inneren Zuganschlag.

### Ausführung der Erfindung

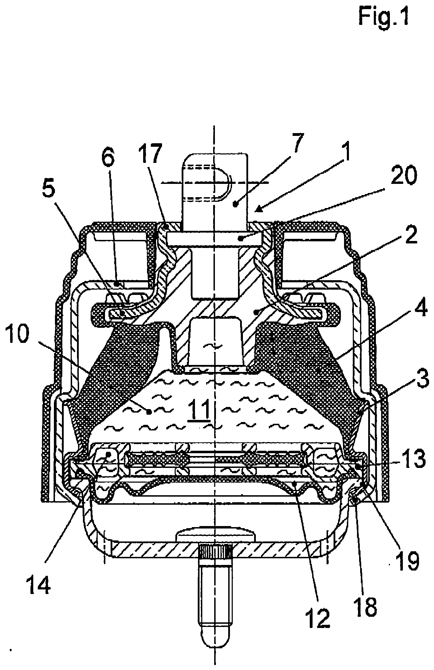

In den Figuren 1 bis 6 ist jeweils ein Ausführungsbeispiel eines erfindungsgemäßen Aggregatelagers gezeigt, in dem ein erfindungsgemäßer Lagerkern 1 zur Anwendung gelangt.

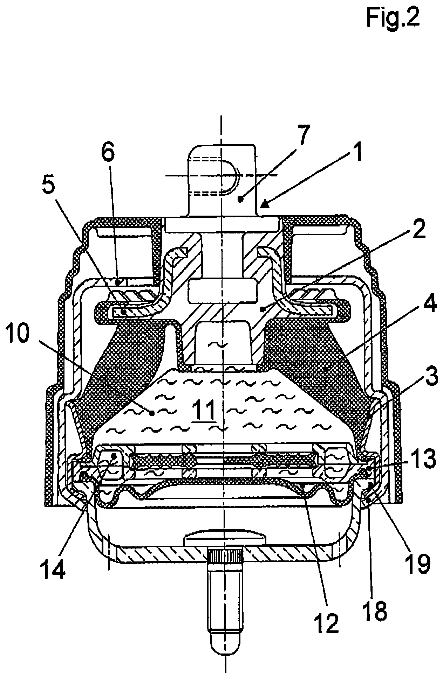

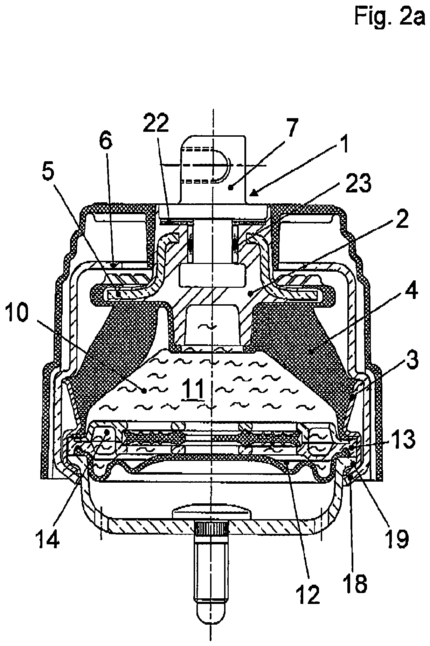

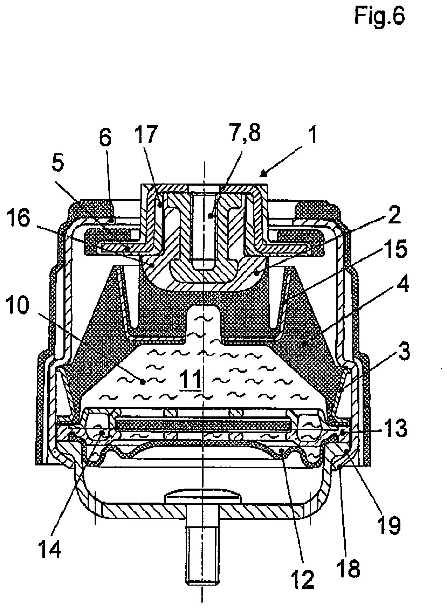

Der Lagerkern 1 ist jeweils als Mehrkörperkern ausgebildet und umfasst eine Ummantelung 2 aus einem polymeren Werkstoff sowie einen Anschlag 5 aus einem metallischen Werkstoff. Der Anschlag 5 ist jeweils durch ein Blechteil gebildet und in den Figuren 1 und 6 teilweise, in den Figuren 2 bis 5 vollständig umschlossen. Durch die Ummantelung 2 besteht in keinem der Ausführungsbeispiele ein unmittelbarer Kontakt zwischen dem metallischen Anschlag 5 und dem Federkörper 4 aus elastomerem Werkstoff; eine in diesem Fall unerwünscht gute, materialbedingte Wärmeleitung vom Anschlag 5 zum Federkörper 4 und ins Innere des Aggregatelagers wird dadurch vermieden, dass die Ummantelung 2 als Wärmeisolation fungiert.
Zur Begrenzung extremer Auslenkbewegungen zwischen dem Lagerkern 1 und dem Auflager 3 in axialer und/oder radialer Richtung ist der Anschlag 5 vorgesehen, der eine ausreichend große Festigkeit aufweist. Ein Anschlag aus einem polymeren Werkstoff wäre nicht ausreichend fest. Der Anschlag 5 besteht in den hier gezeigten Ausführungsbeispielen aus einem metallischen Werkstoff, der gegenüber seiner Umgebung durch die Ummantelung 2 wärmeisoliert ist.

Der Anschlag 5 und der Federkörper 4 sind von dem topfförmig ausgebildeten Anschlaggehäuse 6 umschlossen, wobei das Anschlaggehäuse 6 an seinem dem Lagerkern 1 axial abgewandten Ende 18 um das entsprechende Ende 19 des Auflagers 3 umgebördelt ist.

In jedem der Ausführungsbeispiele ist das Aggregatelager als Hydrolager ausgebildet und weist einen mit Dämpfungsflüssigkeit 10 gefüllten Arbeits-11 und Ausgleichsraum 12 auf, die durch eine Trennwand 13 getrennt und durch den Dämpfungskanal 14 flüssigkeitsleitend miteinander verbunden sind. Die Hydrolager gelangen zum Beispiel in Kraftfahrzeugen zur Anwendung, um eine Verbrennungskraftmaschine gegenüber einem Chassis zu lagern.

In Figur 1 ist ein erstes Ausführungsbeispiel eines Aggregatelagers und eines Lagerkerns 1 gezeigt. Die Stirnseite 17 des Anschlags 5, die dem Arbeitsraum 11 axial abgewandt ist, ist um einen Bund 20 der Befestigungseinrichtung 7 umgebördelt
Die Herstellung des Lagerkerns 1 erfolgt derart, dass die Befestigungseinrichtung 7 und der Anschlag 5 zu einer vormontierbaren Einheit verbunden werden, wobei die vormontierbare Einheit anschließend mit dem polymeren Werkstoff der Ummantelung 2 umspritzt wird.

In Figur 2 und Figur 2a ist ein zweites Ausführungsbeispiel gezeigt, bei dem der als metallisches Tiefziehtteil ausgebildete Anschlag 5 von der Ummantelung 2 vollständig umschlossen ist. Die Befestigungseinrichtung 7 wird zusammen mit dem Anschlag 5 vom polymeren Werkstoff der Ummantelung 2 umspritzt. In Figur 2a ist die Befestigungseinrichtung 7 gegenüber der Ummantelung 2 durch eine Glimmerscheibe 22 und ein Glimmerrohr 23 wärmeisoliert.

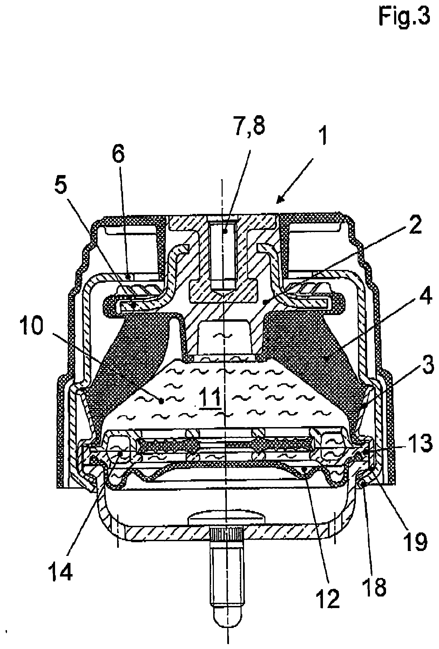

In Figur 3 ist ein Ausführungsbeispiel gezeigt, ähnlich dem Ausführungsbeispiel aus Figur 2, wobei das Befestigungselement 7 als Sacklochgewinde 8 ausgebildet ist.

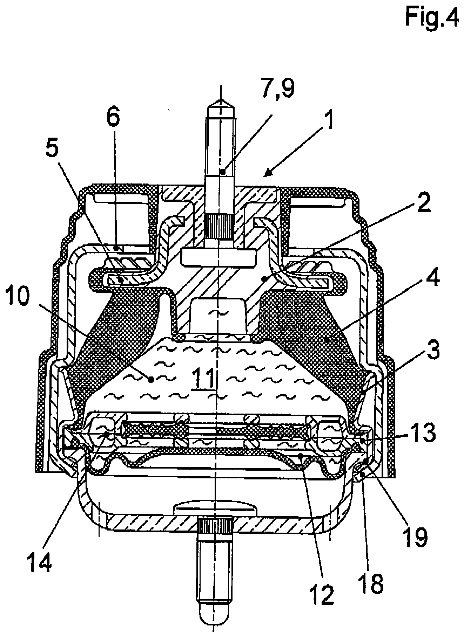

In Figur 4 Ist ein weiteres Ausführungsbeispiel gezeigt, dass sich vom Ausführungsbeispiel aus Figur 3 dadurch unterscheidet, das als Befestigungselement 7 eine Schraube 9 zur Anwendung gelangt.

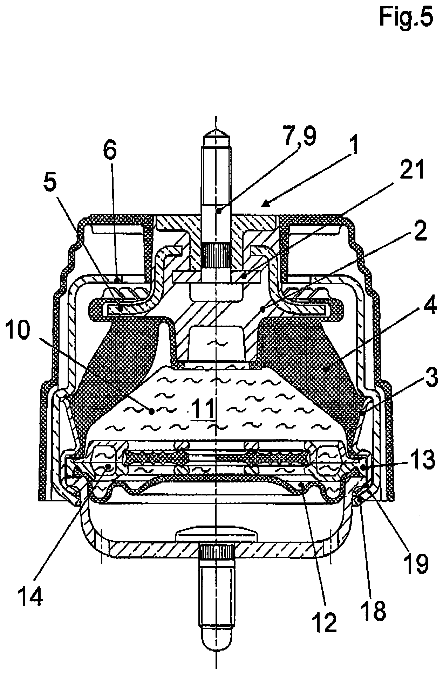

In Figur 5 ist ein Ausführungsbeispiel gezeigt, ähnlich dem Ausführungsbeispiel aus Figur 4. Der Unterschied besteht darin, dass unter dem Kopf der Schraube 9 eine Scheibe 21 angeordnet ist, über die der Formschluss im Lagerkern 1 hergestellt wird.

In Figur 6 ist ein Ausführungsbeispiel gezeigt, mit einem Zwischenring 15 und einem inneren Zuganschlag 16. Durch eine solche Ausführung besteht die Möglichkeit eines Baukastensystems. Unterschiedlich gestaltete Zwischenringe 15 können mit unterschiedlich gestalteten inneren Zuganschlägen 16 kombiniert werden, so dass beispielsweise Befestigungseinrichtungen 7 in Form eines Sacklochgewindes 8 entsprechend Figur 3 oder in Form einer Schraube 9 entsprechend Figur 4 bedarfsweise zur Anwendung gelangen können.

## Patentansprüche

1. Aggregatelager, umfassend einen Lagerkern (1) und ein Auflager (3), wobei der Lagerkern (1) als Mehrkörperkern ausgebildet ist, umfassend zumindest einen Anschlag (5) aus einem metallischen Werkstoff, der von einer Ummantelung (2) aus einem wärmeisolierenden Werkstoff zumindest teilweise umschlossen ist, wobei der wärmeisolierende Werkstoff durch einen polymeren Werkstoff gebildet ist, wobei der Anschlag (5) zur Begrenzung extremer Auslenkbewegungen des Lagerkerns (1) relativ zum Auflager (3) an ein Anschlaggehäuse (6) anlegbar ist, wobei die Ummantelung (2) und das Auflager (3) durch einen Federkörper (4) aus einem elastomeren Werkstoff aufeinander abgestützt sind, **dadurch gekennzeichnet, dass** der Anschlag (5) und der Federkörper (4) vom Anschlaggehäuse (6) im Wesentlichen topfförmig umschlossen sind, und der Federkörper (4) nur mit der Ummantelung (2) und nicht mit dem metallischen Werkstoff in Berührung kommt.

2. Aggregatelager nach Anspruch 1, **dadurch gekennzeichnet, dass** der polymere Werkstoff einen mineralischen Füllstoff aufweist.

3. Aggregatelager nach Anspruch 2, **dadurch gekennzeichnet, dass** der Füllstoff durch gemahlenen Glimmer gebildet ist.

4. Aggregatelager nach einem der Ansprüche 1 bis 3, **dadurch gekennzeichnet, dass** der Anschlag (5) von der Ummantelung (2) vollständig ummantelt ist.

5. Aggregatelager nach einem der Ansprüche 1 bis 4, **dadurch gekennzeichnet, dass** die Ummantelung (2) aus Polyamid 6.6, gefüllt mit Glasfasern besteht und eine Dicke von zumindest 5 mm aufweist.

6. Aggregatelager nach einem der Ansprüche 1 bis 5, **dadurch gekennzeichnet, dass** der Anschlag (5) durch ein Blechteil gebildet ist.

7. Aggregatelager nach einem der Ansprüche 1 bis 6, **dadurch gekennzeichnet, dass** das Anschlaggehäuse (6) und das Auflager (3) kraft- und/oder formschlüssig miteinander verbunden sind.

8. Aggregatelager nach einem der Ansprüche 1 bis 7, **dadurch gekennzeichnet, dass** der Lagerkern (1) eine Befestigungseinrichtung (7) zur Befestigung eines Aggregats aufweist.

9. Aggregatelager nach Anspruch 8, **dadurch gekennzeichnet, dass** die Befestigungseinrichtung (7) durch ein Sacklochgewinde, eine Schraube oder einen Zapfen mit Querbohrung gebildet ist.

10. Aggregatelager nach einem der Ansprüche 8 oder 9, **dadurch gekennzeichnet, dass** die Befestigungseinrichtung (7) auf ihren der Ummantelung (2) zugewandten Seiten zumindest teilweise von einem Glimmer-Wärmeschutzschild (22, 23) überdeckt ist.

11. Aggregatelager nach Anspruch 10, **dadurch gekennzeichnet, dass** das Glimmer-Wärmeschutzschild (22, 23) durch eine Glimmerscheibe (22) und/oder ein Glimmerrohr (23) gebildet ist

12. Aggregatelager nach einem der Ansprüche 1 bis 11, **dadurch gekennzeichnet, dass** es als Hydrolager ausgebildet ist, wobei der Lagerkern (1), das Auflager (3) und der Federkörper (4) einen jeweils mit Dämpfungsflüssigkeit (10) gefüllten Arbeits- (11) und Ausgleichsraum (12) begrenzen, wobei der Arbeits- (11) und der Ausgleichsraum (12) durch eine Trennwand (13) voneinander getrennt und durch einen Dämpfungskanal (14) flüssigkeitsleitend miteinander verbunden sind.

13. Lagerkern für ein Aggregatelager, der als Mehrkörperkern ausgebildet ist, umfassend zumindest einen Anschlag (5) aus einem metallischen Werkstoff, der von einer Ummantelung (2) aus einem wärmeisolierenden Werkstoff zumindest teilweise umschlossen ist, und wobei der wärmeisolierende Werkstoff durch einen polymeren Werkstoff gebildet ist, **dadurch gekennzeichnet, dass** ein elastomerer Federkörper (4) nur mit der Ummantelung (2) und nicht mit dem metallischen Werkstoff in Berührung kommt, und wobei der polymere Werkstoff einen mineralischen Füllstoff aufweist, der durch gemahlenen Glimmer gebildet ist.

14. Lagerkern Anspruch 13, **dadurch gekennzeichnet, dass** die Ummantelung (2) den Anschlag (5) vollständig ummantelt.

15. Lagerkern nach Anspruch 13 oder 14, **dadurch gekennzeichnet, dass** die Ummantelung (2) aus Polyamid 6.6, gefüllt mit Glasfasern besteht und eine Dicke von zumindest 5 mm aufweist.

## Claims

1. An aggregate mount comprising a mount core (1) and a support (3), wherein the mount core (1) is configured as a multiple-body core, comprising at least one stopper (5) made of a metal material which is at least partly enclosed by a coating (2) made of a heat insulating material, wherein the heat insulating material is formed by a polymer material, wherein the stopper (5) is capable of abutting against a stopper housing (6) to restrict extreme deflections of the mount core (1) relative to the support (3), wherein the coating (2) and the support (3) are supported on each other by a spring body (4) made of an elastomer material, **characterized in that** the stopper (5) and the spring body (4) are enclosed by the stopper housing (6) in an essentially cup-shaped manner and the spring body (4) contacts the coating (2) only, but not the metal material.

2. The aggregate mount according to claim 1, **characterized in that** the polymer material includes a mineral filler.

3. The aggregate mount according to claim 2, **characterized in that** the filler is formed by ground mica.

4. The aggregate mount according to any of claims 1 to 3, **characterized in that** the stopper (5) is completely enclosed by the coating (2).

5. The aggregate mount according to any of claims 1 to 4, **characterized in that** the coating (2) consists of polyamide 6,6 filled with glass fibre and has a thickness of at least 5 mm.

6. The aggregate mount according to any of claims 1 to 5, **characterized in that** the stopper (5) is formed by a sheet metal part.

7. The aggregate mount according to any of claims 1 to 6, **characterized in that** the stopper housing (6) and the support (3) are connected to each other in a positive and/or in a non-positive manner.

8. The aggregate mount according to any of claims 1 to 7, **characterized in that** the mount core (1) includes a fixation device (7) for fixing an aggregate.

9. The aggregate mount according to claim 8, **characterized in that** the fixation device (7) is formed by a threaded blind hole, a screw or a cross-bored pin.

10. The aggregate mount according to any of claims 8 or 9, **characterized in that** the fixation device (7) is at least partly covered by a mica heat shield (22, 23) at its sides facing the coating (2).

11. The aggregate mount according to claim 10, **characterized in that** the mica heat shield (22, 23) is formed by a mica disk (22) and/or a mica tube (23).

12. The aggregate mount according to any of claims 1 to 11, **characterized in that** it is formed as a hydro mount, wherein the mount core (1), the support (3) and the spring body (4) enclose a working room (11) and a compensating room (12) which are each filled with a damping fluid (10), wherein the working room (11) and the compensating room (12) are separated by a partition wall (13) and connected to one another in a fluid-conductive manner via a damping channel (14).

13. A mount core for an aggregate mount configured as a multiple-body core, comprising at least one stopper (5) made of a metal material which is at least partly enclosed by a coating (2) made of a heat insulating material, and wherein the heat insulating material is formed by a polymer material, **characterized in that** an elastomer spring body (4) contacts the coating (2) only, but not the metal material, and wherein the polymer material includes a mineral filler formed by ground mica.

14. The mount core according to claim 13, **characterized in that** the coating (2) encloses the stopper (5) completely.

15. The mount core according to claim 13 or 14, **characterized in that** the coating (2) consists of polyamide 6,6 filled with glass fibre and has a thickness of at least 5 mm.

## Revendications

1. Palier d'agrégat, comprenant un noyau de palier (1) et un coussinet (3), dans lequel le noyau de palier (1) est réalisé comme un noyau à corps multiples, comprenant au moins une butée (5) en un matériau métallique qui est entouré au moins partiellement par une enveloppe (2) en un matériau thermoisolant, dans lequel le matériau thermoisolant est formé par un matériau polymère, dans lequel la butée (5) peut être posée pour la limitation de mouvements de déviation extrêmes du noyau de palier (1) par rapport au coussinet (3) contre un boîtier de butée (6), dans lequel l'enveloppe (2) et le coussinet (3) sont en appui l'un sur l'autre par un corps de ressort (4) en un matériau élastomère, **caractérisé en ce que** la butée (5) et le corps de ressort (4) sont entourés sensiblement en forme de pot par le boîtier de butée (6), et
le corps de ressort (4) vient en contact seulement avec l'enveloppe (2) et pas avec le matériau métallique.

2. Palier d'agrégat selon la revendication 1, **caractérisé en ce que** le matériau polymère présente un matériau de remplissage minéral.

3. Palier d'agrégat selon la revendication 2, **caractérisé en ce que** le matériau de remplissage est formé par un mica pulvérisé.

4. Palier d'agrégat selon l'une des revendications 1 à 3, **caractérisé en ce que** la butée (5) est complètement enveloppée par l'enveloppe (2).

5. Palier d'agrégat selon l'une des revendications 1 à 4, **caractérisé en ce que** l'enveloppe (2) se compose de polyamide 6.6 remplie de fibres de verre et présente une épaisseur d'au moins 5 mm.

6. Palier d'agrégat selon l'une des revendications 1 à 5, **caractérisé en ce que** la butée (5) est formée par une pièce de tôle.

7. Palier d'agrégat selon l'une des revendications 1 à 6, **caractérisé en ce que** la butée de boîtier (6) et le coussinet (3) sont raccordés à force et/ou à complémentarité de formes l'un à l'autre.

8. Palier d'agrégat selon l'une des revendications 1 à 7, **caractérisé en ce que** le noyau de palier (1) présente un dispositif de fixation (7) pour la fixation d'un agrégat.

9. Palier d'agrégat selon la revendication 8, **caractérisé en ce que** le dispositif de fixation (7) est formé par un filet de trou borgne, une vis ou un tenon avec perçage transversal.

10. Palier d'agrégat selon la revendication 8 ou 9, **caractérisé en ce que** le dispositif de fixation (7) est recouvert sur ses côtés tournés vers l'enveloppe (2) au moins partiellement par un bouclier de protection thermique en mica (22, 23).

11. Palier d'agrégat selon la revendication 10, **caractérisé en ce que** le bouclier de protection thermique en mica (22, 23) est formé par un disque en mica (22) et/ou un tube en mica (23).

12. Palier d'agrégat selon l'une des revendications 1 à 11, **caractérisé en ce qu'**il est réalisé comme un palier hydraulique, dans lequel le noyau de palier (1), le coussinet (3) et le corps de ressort (4) délimitent un espace de travail (11) et de compensation (12) rempli respectivement de liquide d'amortissement (10), dans lequel l'espace de travail (11) et de compensation (12) sont séparés l'un de l'autre par une paroi de séparation (13) et sont reliés l'un à l'autre par conduction de liquide par un canal d'amortissement (14).

13. Noyau de palier pour un palier d'agrégat qui est réalisé comme un noyau à corps multiples, comprenant au moins une butée (5) en un matériau métallique qui est entouré au moins partiellement par une enveloppe (2) en un matériau thermoisolant, et dans lequel le matériau thermoisolant est formé par un matériau polymère, **caractérisé en ce qu'**un corps de ressort (4) élastomère vient en contact seulement avec l'enveloppe (2) et pas avec le matériau métallique, et dans lequel le matériau polymère présente un matériau de remplissage minéral qui est formé par un mica pulvérisé.

14. Noyau de palier selon la revendication 13, **caractérisé en ce que** l'enveloppe (2) entoure complètement la butée (5).

15. Noyau de palier selon la revendication 13 ou 14, **caractérisé en ce que** l'enveloppe (2) se compose de polyamide 6.6 remplie de fibres de verre et présente une épaisseur d'au moins 5 mm.
